# EUROPEAN PATENT APPLICATION

(11) **EP 3 260 825 A1**
(43) Date of publication of application: **27.12.2017**
(21) Application number: 17175369.2
(22) Date of filing: 09.06.2017
(51) Int. Cl.: G01F 23/284, B64D 37/00, B64D 37/06, B64C 3/34, G01F 23/26

(54) **A METHOD OF FORMING A STRUCTURAL PORTION OF A FUEL TANK FOR AN AIRCRAFT**

(30) Priority: 22.06.2016 GB 201610934
(71) Applicant: Airbus Operations Limited, Bristol BS34 7PA (GB)
(72) Inventor: BAUMBACH, Volker, Bristol, BS34 7PA (GB)
(74) Representative: Paton, David William

(57) **Abstract**

The present application relates to a method of forming a structural portion (21) of a fuel tank (20) for an aircraft in which the structural portion is formed from a fibre reinforced polymer and a sensor (30) is integrated in the structural portion (21). The method includes providing a fibre ply which acts as a structural component, and embroidering an electrically conductive wire (31) in a predetermined pattern on the fibre ply to form the sensor (30). The fibre ply acts as a sensor substrate. Furthermore, the method includes applying a polymer matrix to the fibre ply so that the fibre ply and electrically conductive wire (31) are covered by the polymer matrix. The present application also relates to a fuel tank (20) for an aircraft, a fuel quantity indicating system, and an aircraft.

## Description

### FIELD OF THE INVENTION

The present invention relates to a method of forming a structural portion of a fuel tank for an aircraft, in particular a method of forming a structural portion of a fuel tank having a sensor integrated in the structural portion. The present invention also relates to a fuel tank for an aircraft, a fuel quantity indicating system, and an aircraft.

### BACKGROUND OF THE INVENTION

Aircraft have fuel quantity measuring systems for measuring the quantity of fuel in their fuel tanks. A typical fuel quantity measuring system includes fuel probes in the fuel tank to directly determine the fuel level in the fuel tank.

By placing fuel probes in a fuel tank, the probes are necessarily exposed to fuel in the fuel tank. As such the probes must be capable of long term exposure the fuel environment in the tank. Such an arrangement also requires the provision of electrical wiring in the fuel tank. The presence of electrical wiring in the fuel tank requires additional precautions and requirements, such as explosion prevention requirements, and also increases manufacturing and maintenance times due to the complexity and difficult accessibility of the interior of the fuel tank.

One possible solution is the provision of wireless sensors which are mountable to the outside of a fuel tank but are able to determine the quantity of fuel in the fuel tank. US 7 814 786 B1 describes a fuel quantity measuring system having a wireless sensor assembly. The sensor assembly comprises a sensor and a substrate which is used for mounting the sensor. The sensor comprises an electrically conductive trace disposed on the substrate. The electrically conductive trace is a spiral winding of conductive material. The spiral winding of conductive material acts as an open-circuit magnetic field response sensor.

An interrogation system is used to interrogate the sensor. The interrogation system includes a broadband radio frequency (RF) antenna configured to transmit and receive RF energy to and from the sensor. The interrogation system is then able to determine the quantity of fuel in the fuel tank based on the sensor.

With such a sensor assembly, the accuracy of the sensor is at least partially dependent on maintaining the path and spacing of the electrically conductive trace. As such, the substrate enables the sensor to be mounted to the outside of the fuel tank and ensures that the correct configuration of the electrically conductive trace is maintained. Such a sensor is exposed to the external environment of the fuel tank, and may become at least partially detached from the outer surface of the fuel tank.

WO 2013/188443 describes embedding a sensor system into the wall of a polyethylene fuel tank. However, a problem with embedding the sensor in a structural wall of a fuel tank is that stress concentration points may be generated at the periphery of the sensor substrate. This may reduce the structural integrity and reliability of the fuel tank.

### SUMMARY OF THE INVENTION

According to a first aspect of the invention there is provided a method of forming a structural portion of a fuel tank for an aircraft, the structural portion being formed from a fibre reinforced polymer and having a sensor integrated in the structural portion, the method comprising providing a fibre ply acting as a structural component, embroidering an electrically conductive wire in a predetermined pattern on the fibre ply to form the sensor so that the fibre ply acts as a sensor substrate, and applying a polymer matrix to the fibre ply, so that the fibre ply and electrically conductive wire are covered by the polymer matrix.

As such, it is possible to remove the need for a separate dedicated substrate, whilst providing for the necessary accurate arrangement and configuration of the electrical conductive wire. By embroidering the electrically conductive wire to the fibre ply, it is possible to fixedly configure the electrical conductive wire.

By covering the electrically conductive wire with the polymer matrix it is possible for the electrically conductive wire to be isolated from the environment external to the fuel tank and the internal environment of the fuel tank. As such the sensor is non-invasive, and is protected from the external environment.

The method may further comprise providing a magnetic field response sensor as the sensor.

The method may further comprise covering the sensor with the polymer matrix so that the sensor is electrically isolated.

The method may further comprise providing a structural fibre ply stack to form part of the structural portion, wherein the fibre ply is arranged in the structural fibre ply stack.

The method may further comprise providing the sensor between the fibre ply on which the sensor is embroidered and another fibre ply of the structural fibre ply stack.

With such an arrangement, the protection afforded to the sensor is improved.

The method may further comprise providing the sensor on an outer face of the structural fibre ply stack.

As such, ease of inspection of the sensor may be improved.

The method may further comprise providing the predetermined pattern as a spiral arrangement.

The method may further comprise providing the predetermined pattern on a plane.

With such an arrangement, the accuracy of the sensor is improved, and the sensor is provided in a two dimensional orientation.

The method may further comprise forming the fibre ply from carbon fibre.

The method may further comprise forming the polymer matrix from a resin.

The method may further comprise embroidering the electrically conductive wire to the fibre ply by tailored fibre placement.

As such, it is possible to reliably and quickly embroider the electrically conductive wire to the fibre ply.

The method may further comprise embroidering the electrically conductive wire to the fibre ply using the double lock stitch technique.

Therefore, the ease of manufacturing using an embroidering technique is increased.

The fibre ply may extend significantly from the boundary of the sensor.

With such an arrangement, there are no ramped plies in the vicinity of the sensor. As such, the stresses acting on the structural portion in the vicinity of the fuel tank and on the sensor itself may be minimised and so the reliability of the system is maximised.

The method may further comprise applying the polymer matrix so that the electrically conductive wire is electrically isolated.

As such, the sensor is a passive sensor and so does not comprise any moving or electrically connected elements. The reliability of a system comprising such a sensor is therefore maximised.

According to another aspect of the invention, there is provided a fuel tank for an aircraft comprising: a structural portion of the fuel tank, the structural portion being formed from a fibre reinforced polymer comprising a fibre ply acting as a structural component and a polymer matrix, a sensor integrated in the structural portion, the sensor comprising an electrically conductive wire embroidered to the fibre ply in a predetermined pattern in which the fibre ply acts as a sensor substrate, wherein the fibre ply and electrically conductive wire embroidered to the fibre ply are covered by the polymer matrix.

According to another aspect of the invention, there is provided a fuel quantity indicating system comprising a fuel tank as recited above and an interrogation system spaced from the sensor which is configured to interrogate the sensor to determine a fuel quantity in the fuel tank.

According to another aspect of the invention, there is provided an aircraft comprising a fuel quantity indicating system as recited above.

### BRIEF DESCRIPTION OF THE DRAWINGS

Embodiments of the invention will now be described with reference to the accompanying drawings, in which:
Fig. 1 is a perspective view of an aircraft with a fuel tank;
Fig. 2 is a schematic perspective view of the fuel tank of the aircraft of Fig. 1 with a sensor of a wireless sensing system integrated in a wall of the fuel tank;
Fig. 3 is a schematic cross-sectional view of a portion of the fuel tank shown in Fig. 2 with the integrated sensor;
Fig. 4 is a schematic partial view of part of a fibre ply with an electrically conductive wire forming the integrated sensor partially embroidered to the fibre ply during manufacture;
Fig. 5 is a schematic partial view of part of a fibre ply with an electrically conductive wire embroidered to the fibre ply; and
Fig. 6 is a flow diagram showing a method of forming a structural portion of the fuel tank for the aircraft of Fig. 1.

### DETAILED DESCRIPTION OF EMBODIMENT(S)

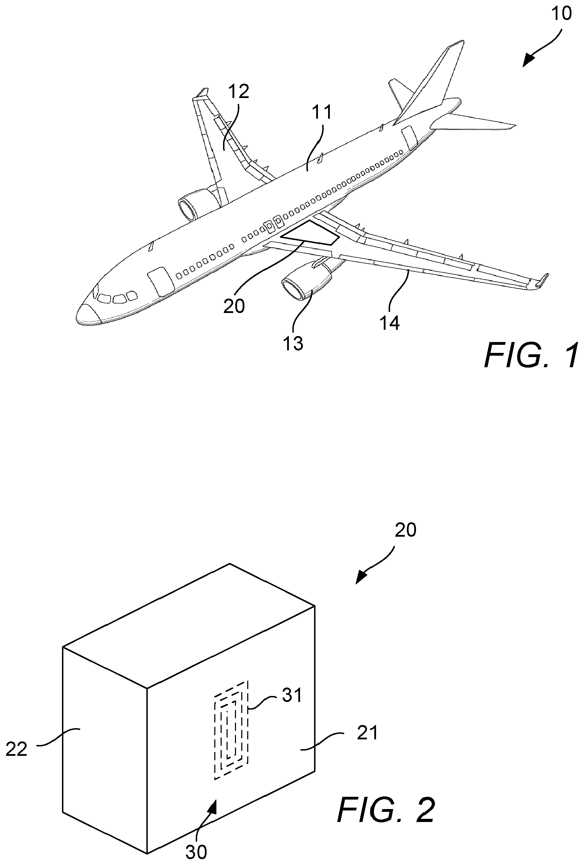

Referring to Fig. 1, an aircraft 10 is shown. The aircraft 10 has a fuselage 11 and wings 12. The wings 12 extend from the fuselage 11. An engine 13 is mounted to each wing 12.

Fuel for each engine 13 is stored in one or more aircraft fuel tanks 20. Fuel for each engine is stored in a centre tank within the fuselage 13 and one or more wing tanks within the wings 12. The description below refers to the aircraft fuel tank 20, which could equally refer to the centre tank, any of the wing tanks, or an alternative fuel tank arrangement.

Referring to Fig. 2, a schematic view of a fuel tank 20 is shown. The fuel tank 20 includes a number of fuel tank structural portion 21, such as a base, outer walls and an upper side. The fuel tank 20 defines a fuel receiving space 22. The fuel tank structural portions 21 may be formed from other structural parts of the aircraft 10, such as skins, ribs and spars. The structural portion 21 is a portion that contributes to the structure of the fuel tank.

In Fig. 2, one structural portion 21, in this case a wall, has a sensor 30. The sensor 30 is integrated in the structural portion 21. It will be understood that the configuration of the sensor 30 and the fuel tank 20 is shown schematically in Fig. 2 and so the configuration may vary.

The sensor 30 is isolated from the fuel receiving space 22 of the fuel tank 20. Therefore, the sensor 30 cannot come into contact with fuel received therein. The sensor 30 is also isolated from the external environment outside the fuel tank.

The sensor 30 is part of a fuel quantity measuring system 40. The fuel quantity measuring system 40 comprises the sensor 30 and an interrogation system 50. The fuel quantity measuring system 40 is non-invasive. That is, none of the components of the fuel quantity measuring system 40 are exposed to the fuel receiving space 21 of the fuel tank 20.

Details of the arrangement and method of operation of the fuel quantity measuring system 40 are disclosed in detail in US Patent Number 7 814 786 B1, filed 17 January 2008, the contents of which are hereby incorporated by reference. A detailed description of the fuel quantity measuring system 40 and its method of operation will only be described briefly herein.

The fuel quantity measuring system 40 is a wireless sensing system. That is, the sensor 30 is electrically isolated from the remainder of the fuel quantity measuring system 40. The sensor 30 is formed of an electrical conductor 31 shaped to form a spiral arrangement. The electrical conductor 31 is arranged on a plane, that is in a two-dimensional geometric pattern. The electrical conductor 31 has an open-circuit arrangement, having inductance and capacitance. The sensor 30 is able to store and transfer electrical and magnetic energy. The spiral arrangement of the electrical conductor 31 is shown in Fig. 2.

The electrical conductor 31 of the sensor 30 is formed from an electrically conductive wire. By using an electrically conductive wire, the reliability of the sensor is maximised. The method of forming the sensor 30 will be described below.

The electrically conductive wire has a uniform cross section along its length. The electrically conductive wire is arranged, upon assembly, to have uniform spacing between adjacent sections of the electrically conductive wire. Adjacent sections extend parallel to each other. However, the sensor 30 is not limited to a uniformly spaced, spiral arrangement, and may be another geometrically shaped conductor arrangement. However, it will be understood that the specific arrangement and geometry of the electrical conductor 31 should be predefined and maintained throughout forming of the sensor and structural portion 21 of the fuel tank 20.

The sensor 30 in which inductance and capacitance are operatively coupled defines a magnetic field response sensor.

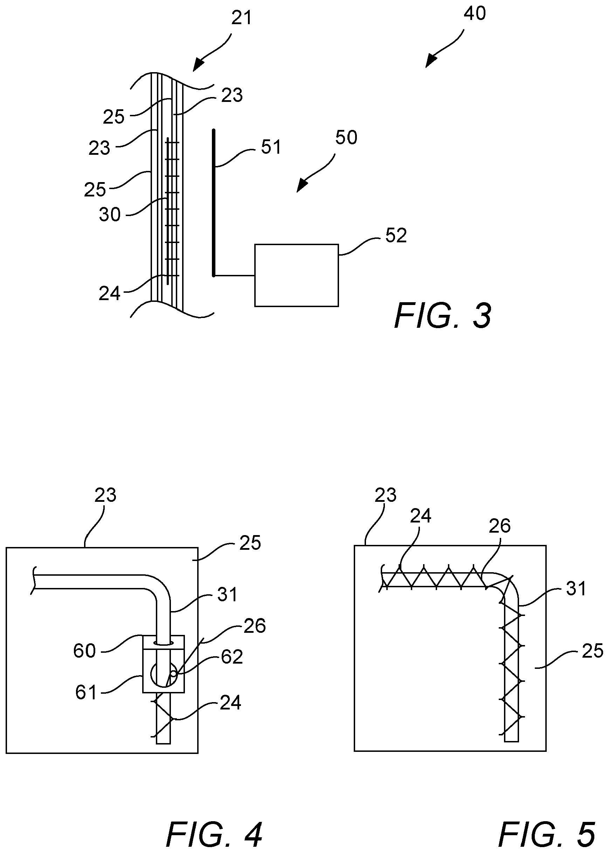

The interrogation system 50 is a magnetic field response recorder. Referring to Fig. 3, the interrogation system 50 includes an antenna 51 and a control unit 52. The antenna 51 is a broadband radio frequency (RF) antenna configured to transmit and receive RF energy. It will be understood that the antenna 52 may be a single antenna, or separate transmission and receiving antennas.

The control unit 52 comprises a processor and a memory. The control unit 52 is configured to control the antenna 51 to transmit RF energy. The control unit 52 is also configured to determine the response received by the antenna 51.

The sensor 30 resonates in the presence of a time-varying magnetic field to generate a harmonic response having a frequency, amplitude and bandwidth. The interrogation system 50, acting as a magnetic field response recorder, wirelessly transmits the time-varying magnetic field to the sensor and wirelessly detects the sensor's response frequency, amplitude and bandwidth.

The antenna 52 is disposed proximate to the sensor 30, within range to reliably transmit and receive RF energy to the sensor 30. The antenna 52 is disposed external to the fuel tank 30. As such, the interrogation system 52 is more easily accessible for installation and maintenance. The interrogation system 52 is in spaced relationship to the sensor 30.

The structural portion 21 of the fuel tank 20 is shown schematically in Fig. 3. The structural portion 21 is formed from a carbon fibre reinforced polymer, such as a carbon fibre reinforced plastic (CFRP). The structural portion 21 comprises carbon fibres acting as a reinforcement. The carbon fibres are arranged in a plurality of fibre plies 23. Each ply 23 is formed from a plurality of fibres arranged in a weave, although the specific arrangement may vary. In Fig. 3, two fibre plies 23 are shown, however the number of plies is not limited to two plies. The structural portion 21 also comprises a resin acting as a polymer matrix 27. The polymer matrix 27 covers the fibre plies and is dispersed between the fibre plies.

Although, in the present embodiment, the structural portion 21 is formed from carbon fibre reinforced polymer, it will be understood that alternative reinforcement materials may be used. For example, an alternative fibre reinforcement material may be used. Furthermore, a combination of carbon fibres and/or alternative fibre materials may be used, for example kevlar, aluminium and fibreglass.

Although, in the present embodiment, the polymer matrix is a resin, it will be understood that materials for the polymer matric may include an epoxy, polyester, vinyl ester or nylon, or another polymerized resin.

The structural component 21 comprises the sensor 30. The sensor 30 is mounted to one of the fibre plies 23. An embroidered arrangement 24, acting as a mounting arrangement, mounts the sensor 30 to the fibre ply 23. The embroidered arrangement 24 directly mounts the electrically conductive wire to the fibre ply 23. Therefore, the sensor 30 is mounted to a mounting face 25 of the fibre ply 23.

The electrically conductive wire is mounted in a fixed relationship on the mounting face 25. The embroidered arrangement 24 comprises a thread 26 which is mounted to the fibre ply 23 by tailored fibre placement. In the present embodiment, the thread 26 is a carbon or Kevlar material, although alternative materials are possible. The thread may be formed from the same material as the fibre ply 23.

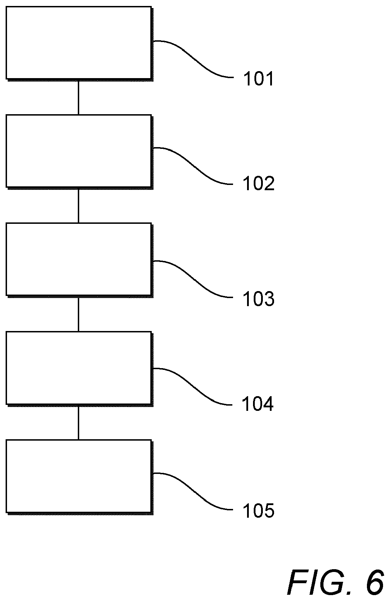

The method of forming the fuel tank 20, and in particular the structural portion 21, will now be described with reference, in particular, to Fig. 4, Fig. 5 and Fig. 6. Although a number of method steps are described below, it will be understood that in embodiments, one or more method steps may be omitted, and/or one or more method steps additionally included. It will also be understood that the order of one or more method steps may be altered.

In step 101, the fibre ply 23, which acts as a structural component of the structural portion, is provided.

At step 102, the electrically conductive wire is mounted to the fibre ply 23 to form the sensor 30. The electrically conductive wire is mounted in place by the embroidered arrangement 24.

The embroidered arrangement 24 is formed by a double lock stitch technique, although the forming of the embroidered arrangement 24 is not limited thereto. The electrically conductive wire is positioned on the fibre ply 23 and fixedly mounted in a predetermined arrangement by the tailored fibre placement, in which the wire acting as the fibre is fed and held in position by a guiding element 61 of an embroidering machine 60. A needle 62 of the embroidering machine 60 stitches the thread 26 through the fibre ply 23 and over the electrically conductive wire in a predetermined pattern. Therefore, the electrically conductive wire is mounted in situ.

Once the desired length of electrically conductive wire is mounted to the fibre ply 23, the embroidering machine 60 is removed. The fibre ply 23 therefore acts as a structural component.

At step 103, the fibre ply 23 on which the electrically conductive wire is mounted is disposed in a stack of fibre plies 23. The fibre ply 23 on which the electrically conductive wire is mounted may be an outer ply, or an inner ply. If positioned as an outer ply, the mounting face 25 on which the sensor 30 is mounted may be exposed or face inwardly. In a situation when the mounting face 25 faces inwardly, or the fibre ply 23 on which the electrically conductive wire is mounted is an inner ply, then the sensor 30 is disposed between two plies.

As one of the fibre plies 23 of the ply stack forming structural components acts as the substrate for the sensor, it has been found by the inventor that it is possible to dispose the sensor 30 in the structural portion without causing a ramped ply arrangement which would result from use of a sensor substrate, whilst enabling the sensor to be fixedly mounted in a predetermined geometric pattern.

The ply stack is disposed in a mold.

At step 104, the polymer matrix 27 is applied to the ply stack. The polymer matrix 27 covers the fibre plies 23 and the sensor 30. When the polymer matrix 27 has hardened, the structural portion 21 is removed from the mold. As such, the sensor 30 is isolated from the fuel receiving space 22 and the environment external to the fuel tank 20.

At step 105, the fuel tank 20 is assembled together with the interrogation system 50 so that the interrogation system 50 is in spaced relationship with the sensor 30.

Although the invention has been described above with reference to one or more preferred embodiments, it will be appreciated that various changes or modifications may be made without departing from the scope of the invention as defined in the appended claims.

## Claims

1. A method of forming a structural portion (21) of a fuel tank (20) for an aircraft (10), the structural portion being formed from a fibre reinforced polymer and having a sensor (30) integrated in the structural portion, the method comprising:
providing a fibre ply (23) acting as a structural component,
embroidering an electrically conductive wire (31) in a predetermined pattern on the fibre ply to form the sensor so that the fibre ply acts as a sensor substrate, and
applying a polymer matrix (27) to the fibre ply, so that the fibre ply and electrically conductive wire are covered by the polymer matrix.

2. The method according to claim 1, further comprising providing a magnetic field response sensor as the sensor (30).

3. The method according to claim 1 or claim 2, further comprising covering the sensor (30) with the polymer matrix (27) so that the sensor is electrically isolated.

4. The method according to any preceding claim, further comprising providing the predetermined pattern as a flat coil arrangement.

5. The method according to any preceding claim, further comprising providing the predetermined pattern on a plane.

6. The method according to any preceding claim, further comprising providing a structural fibre ply stack to form part of the structural portion (21), wherein the fibre ply (23) is arranged as part of the structural fibre ply stack.

7. The method according to claim 6, further comprising providing the sensor (30) between the fibre ply (23) to which the sensor is embroidered and another fibre ply of the structural fibre ply stack.

8. The method according to claim 6, further comprising providing the sensor (30) on an outer face of the structural fibre ply stack.

9. The method according to any preceding claim, further comprising forming the fibre ply (23) from carbon fibre.

10. The method according to any preceding claim, further comprising forming the polymer matrix (27) from a resin.

11. The method according to any preceding claim, further comprising embroidering the electrically conductive wire (31) to the fibre ply (23) by tailored fibre placement.

12. The method according to any preceding claim, further comprising providing the fibre ply (23) to extend significantly from the boundary of the sensor (30).

13. A fuel tank (20) for an aircraft (10) comprising:
a structural portion (21) of the fuel tank, the structural portion being formed from a fibre reinforced polymer comprising a fibre ply (23) acting as a structural component and a polymer matrix (27),
a sensor (30) integrated in the structural portion, the sensor comprising an electrically conductive wire (31) embroidered to the fibre ply in a predetermined pattern in which the fibre ply acts as a sensor substrate,
wherein the fibre ply and electrically conductive wire embroidered to the fibre ply are covered by the polymer matrix.

14. A fuel quantity indicating system comprising a fuel tank (20) according to claim 13 and an interrogation system (50) spaced from the sensor (30) which is configured to interrogate the sensor to determine a fuel quantity in the fuel tank.

15. An aircraft comprising a fuel quantity indicating system according to claim 14.
